# EUROPÄISCHE PATENTSCHRIFT

(11) **EP 2 388 216 B1**
(45) Veröffentlichungstag und Bekanntmachung des Hinweises auf die Patenterteilung: **05.09.2012**
(21) Anmeldenummer: 11163712.0
(22) Anmeldetag: 26.04.2011
(51) Int. Cl.: B65G 47/90

(54) **Greifvorrichtung**
Gripping device
Dispositif de prise

(30) Priorität: 18.05.2010 DE 102010020847
(43) Veröffentlichungstag der Anmeldung: 23.11.2011
(73) Patentinhaber: Krones AG, 93073 Neutraubling (DE)
(72) Erfinder: Ettenhuber, Klaus, 83135, Schechen (DE); Köhl, Bernd, 83059, Kolbermoor (DE); Hertel, Florian, 83064, Raubling (DE)
(74) Vertreter: Benninger, Johannes

(56) Entgegenhaltungen:
- DE-A1- 10 204 513

## Beschreibung

Die vorliegende Erfindung betrifft eine Greifvorrichtung zur Aufnahme und/oder Handhabung mindestens eines Gegenstandes gemäß Oberbegriff des Anspruchs 1. Die Erfindung betrifft weiterhin ein Verfahren zum Lösen von Greifarmen von einem Träger im Falle einer Kollision der Greifarme mit einer starren Oberfläche oder einen Gegenstand.

Aus dem Stand der Technik sind bereits unterschiedliche Greifvorrichtungen bekannt. So offenbart beispielsweise die DE 102 04 513 A1 eine Greifvorrichtung mit zwei Greifarmen zum Greifen von Gegenständen. Einer der beiden Greifarme ist mit einem Fahrzeug verbindbar. Der weitere Greifarm dient zum Öffnen und Schließen der Greifvorrichtung über ein Stellglied. Werden die Greifarme unabsichtlich und mit hoher Geschwindigkeit auf einen starren Untergrund oder auf einen unnachgiebigen Gegenstand aufgesetzt, so kann es aufgrund der dabei auftretenden Kräfte zu Verformungen der Greifarme und/oder deren Halterung kommen.

Eine vorrangige Aufgabe der vorliegenden Erfindung ist es, eine Greifvorrichtung mit beweglichen Greifarmen zur Verfügung zu stellen, die einen zuverlässigen Schutz gegen Beschädigungen bei fehlerhaften Betätigungsschritten oder bei einem unbeabsichtigten Aufsetzen auf einen starren Untergrund bieten kann. Ein weitere Aufgabe der Erfindung besteht darin, ein verbessertes Verfahren zur Absicherung der Greifarme einer Greifvorrichtung gegen ungewollte Kollisionen und Beschädigungen zu liefern.

Die genannten Aufgaben werden durch eine Greifvorrichtung und ein Verfahren gelöst, welche die Merkmale der unabhängigen Patentansprüche 1 und 12 umfasst. Weitere vorteilhafte Ausgestaltungen werden durch die Unteransprüche beschrieben.

Mit der erfindungsgemäßen Greifvorrichtung können Gegenstände und Artikel jeglicher Art erfasst, angehoben und an einen gewünschten Ort versetzt oder erfasst und an einen gewünschten Ort verschoben werden. Grundsätzlich ist die erfindungsgemäße Greifvorrichtung für eine Vielzahl von Gegenständen geeignet. So kommen hierfür beispielsweise Kisten, Kartons oder andere Gegenstände in Frage. Insbesondere ist die Greifvorrichtung für Verpackungsgüter vorgesehen und geeignet. Hierzu zählen beispielsweise auch Gebinde oder Kartonagen, welche mehrere einzelne Objekte umfassen. Typischerweise können die Objekte quaderförmig sein oder zumindest zwei parallele vertikale Seitenflächen aufweisen, so dass sie von der Greifvorrichtung zuverlässig erfasst und gegriffen werden. Zu diesem Zweck umfasst die Greifvorrichtung zwei abstandsveränderliche Greifarme, die an einem gemeinsamen Träger angeordnet sind. So können die Greifarme insbesondere horizontal voneinander beabstandet und an dem Träger über mechanische Verbindungen befestigt und beweglich angeordnet sein. An den Greifarmen können vorzugsweise flexible Klemmbacken zum Erfassen von Gegenständen angeordnet sein. Die Greifarme der Greifvorrichtung sind zum Erfassen eines oder mehrerer Gegenstände relativ zueinander beweglich ausgebildet, was durch eine bewegliche bzw. verschiebbare Lagerung der Greifarme an einem gemeinsamen Träger ermöglicht sein kann. Die Greifvorrichtung selbst kann an einem Roboter, bspw. an einem Portaltroboter, angebracht sein und somit beliebig positioniert bzw. bewegt und gesteuert werden. Um die gewünschte Beweglichkeit zu gewährleisten, ist der Träger mit den daran angeordneten Greifarmen vorzugsweise vertikal und horizontal verschiebbar und kann darüber hinaus um eine vertikale Achse gedreht werden, so dass die Beweglichkeit in allen gewünschten Freiheitsgraden gegen ist.

Die Relativbewegung der beiden Greifarme zueinander kann beispielsweise derart erfolgen, dass beide Greifarme gleichzeitig und mit gleicher Geschwindigkeit aufeinander zubewegt oder voneinander wegbewegt werden können, um auf diese Weise einen Gegenstand greifen, mittels des beweglichen Trägers positionieren und anschließend durch Öffnen der Greifarme wieder loslassen zu können. Gemäß der vorliegenden Erfindung ist jeder Greifarm bei einer definierten Krafteinwirkung, die insbesondere von unten und/oder beim Aufsetzen des Greifarms auf eine starre Oberfläche oder bei einer Kollision des Greifarms mit einem fest Körper auftreten kann, vom Träger lösbar. Diese Lösbarkeit ist vorzugsweise mit der Überwindung einer definierten Haltekraft verbunden, so dass der Greifarm beim Aufsetzen oder bei einer Kollision mit einem starren Körper oder einer unnachgiebigen Oberfläche vom Träger zur Vermeidung von Beschädigungen getrennt wird und abfällt.

Da diese Trennung des Greifarms vom Träger mit keinerlei Beschädigungen verbunden ist, ist sie problemlos reversibel. D.h., der Greifarm kann nach Beseitigung der die Trennung auslösenden Situation bzw. Kollisionslage jederzeit wieder am Träger fixiert werden, ggf. sogar ohne Zuhilfenahme von Werkzeug.

Grundsätzlich sind auch Ausführungsformen im Rahmen der vorliegenden Erfindung vorstellbar, bei welchen die Relativbewegung und das damit verbundene Festhalten eines Verpackungsgutes oder eines Gegenstandes durch eine Schwenkbewegung eines Greifarmes oder beider Greifarme erfolgt. Hierzu sind die Greifarme in einer geeigneten Lagerung am Träger zu befestigen, so dass sie Schwenkbewegungen um horizontale Schwenkachsen ausführen können. Die Bewegung der der beiden Greifarme in vertikaler Richtung erfolgt grundsätzlich synchron, indem der Kopf mit dem Träger, an dem die Greifarme beweglich gehalten und gelagert sind, in vertikaler Richtung gehoben oder gesenkt wird.

Wie erwähnt, sind die Greifarme über ihre mechanischen Verbindungen bei definierter Krafteinwirkung auf den Greifarm in vertikaler Richtung und entgegen dem Träger, d.h. in der Regel von unten, vom Träger lösbar. Die definierte Krafteinwirkung kann in einer bevorzugten Ausführungsform der vorliegenden Erfindung mindestens dem Eigengewicht eines Greifarmes entsprechen. Eine solche definierte Krafteinwirkung entsteht beispielsweise, wenn die Greifarme zu weit nach unten abgesenkt werden und somit auf die Unterlage, auf der sich der zu greifende Gegenstand befindet, aufsetzen. Weiterhin könnte der zu greifende Gegenstand eine unterwünschte Position aufweisen, da er sich beispielsweise verschoben hat, so dass die Greifarme, anstatt den Gegenstand zu greifen, auf diesem aufsetzen, was bei einem starren Gegenstand ebenso dazu führen könnte, dass unter ungünstigen Umständen eine Verformung der Greifarme und/oder des beweglichen Kopfes der Greifvorrichtung mit dem die Greifarme führenden Träger auftritt. Dem wirkt die vorliegende Erfindung dadurch entgegen, dass bei einer solchen Kollision die Greifarme von unten bzw. in vertikaler Richtung und entgegen dem Träger von diesem lösbar sind, vorzugsweise unter Überwindung einer rastenden Verbindung.

Gemäß einer weiteren Ausführungsvariante der erfindungsgemäßen Greifvorrichtung ist die lösbare mechanische Verbindung zwischen jedem Greifarm und dem gemeinsamen Träger durch mindestens zwei korrespondierende und miteinander im Eingriff befindliche Kontaktelemente gebildet, wobei jedes der Kontaktelemente mindestens einen am jeweiligen Greifarm angeordneten ersten Führungsbolzen umfasst. Darüber hinaus sind bei dieser Ausführungsvariante mindestens zwei Verbindungselemente am Träger angeordnet sind, die jeweils mindestens eine Führungsnut zur Aufnahme eines Führungsbolzens eines Greifarmes aufweisen. Dazu passend sind vorzugsweise an jedem Greifarm jeweils mindestens zwei Führungsbolzen angeordnet, die jeweils mit entsprechenden Führungsnuten am Verbindungselement des Trägers korrespondieren und dort aufgenommen sind. Bei dieser ersten Variante der lösbaren mechanischen Verbindung wirken somit Führungsbolzen an den Greifarmen mit korrespondierenden Führungsnuten im Träger zusammen.

Bei einer alternativen Ausführungsvariante der Greifvorrichtung ist die mechanische Verbindung so ausgestaltet, dass Führungsnuten an den Greifarmen mit korrespondierenden Führungsbolzen am Träger zusammenwirken. Somit ist die lösbare mechanische Verbindung zwischen jedem Greifarm und dem gemeinsamen Träger durch mindestens zwei korrespondierende und miteinander im Eingriff befindliche Kontaktelemente gebildet, wobei jedes der Kontaktelemente mindestens eine am jeweiligen Greifarm angeordnete Führungsnut umfasst, und wobei mindestens zwei Verbindungselemente am Träger angeordnet sind, die jeweils mindestens einen ersten Führungsbolzen zur Aufnahme und Führung in der Führungsnut des Greifarms aufweisen. Bei dieser Variante sind an jedem Greifarm jeweils mindestens zwei Führungsnuten angeordnet, die jeweils mit entsprechenden Führungsbolzen am Verbindungselement des Trägers korrespondieren und diese aufnehmen. Darüber hinaus sind auch Mischformen der beiden genannten alternativen Ausführungsvarianten möglich, bei denen an jedem Greifarm und am Träger jeweils sowohl Führungsnuten als auch entsprechend dazu passende und darin geführte und gehaltene Führungsbolzen vorgesehen sein können.

Allen denkbaren und von der Erfindung gleichermaßen umfassten Varianten der Greifvorrichtung ist gemeinsam, dass die Führungsnuten jeweils Führungskulissen für die Führungsbolzen bilden, die jeweils einen unteren Anschlag zur Definition einer Betriebslage der Greifarme sowie einen nach oben und/oder seitlich gekrümmten und offen endenden Verlauf zur Definition eines Bewegungsverlaufs der Greifarme beim Lösen vom Träger durch ein Aufsetzen oder eine Kollision auf eine starre Oberfläche oder einen Körper aufweisen.

Die erwähnte Betriebslage der Greifarme ist dadurch charakterisiert, dass die Greifarme hierbei im Wesentlichen senkrecht stehen und die vom beweglichen Kopf vorgegebenen Haltebewegungen bzw. Zustellbewegungen ausführen können, wobei die Klemmbacken zum Halten und Fixieren der Gegenstände, Verpackungsgüter oder Gebinde ebenfalls im Wesentlichen ebenfalls senkrecht und parallel gegenüber liegend angeordnet sind. Sobald die Greifarme die Betriebslage verlassen, führen sie eine Schwenkbewegung aus, wie nachfolgend noch näher beschrieben ist. Im Zusammenhang mit dieser Schwenk- und Ausweichbewegung lösen sie sich in gewünschter Weise vom Träger, um jegliche Beschädigungsgefahr für den Träger, den beweglichen Kopf und/oder die Greifarme selbst auszuschließen.

Vorzugsweise weist jede mechanische Verbindung jedes Greifarms am Träger zumindest zwei in vertikalem Abstand voneinander angeordnete Führungsnuten am Verbindungselement des Trägers oder am Greifarm zur Aufnahme und zur Führung von mindestens zwei korrespondierenden Führungsbolzen in entsprechendem vertikalem Abstand voneinander auf. Diese mindestens zwei Führungsnuten weisen zudem jeweils unterschiedliche Verläufe und Krümmungen auf, um die Funktionsweise und den Ablauf der Trennung des Greifarms vom Träger exakt zu definieren. Der Verlauf der ersten, oberen Führungsnut weist vom unteren Anschlag aus in gekrümmtem Verlauf zur Außenseite des Trägers. Der Verlauf der zweiten, unteren Führungsnut weist von ihrem unteren Anschlag aus zunächst vertikal nach oben und anschließend in gekrümmtem Verlauf zur Außenseite des Trägers. Der zunächst vertikale Verlauf der unteren Führungsnut sorgt für die angedeutete Schwenkbewegung des Greifarms bei seiner vertikalen Bewegung nach oben, da die obere, sich nach außen öffnende Führungsnut den entsprechenden Führungsbolzen nach außen führt, während die untere Führungsnut eine ausschließlich vertikale Bewegung zulässt. Dies führt zur erwähnten Schwenkbewegung, bei der die untere Klemmbacke des Greifarms in Richtung zu einer mittleren Symmetrieebene bzw. in Richtung auf die gegenüber liegende Klemmbacke des zweiten Greifarms bewegt wird. Da auch die untere Führungsnut nach dem zunächst vertikalen Verlauf nach außen gekrümmt verläuft und sich öffnet, kann der Greifarm nach der kurzen Schwenkbewegung nach einer weiteren Bewegung nach oben vom Träger abfallen und unbeschädigt aufgenommen werden.

Die Greifarme sind am Verbindungselement vorzugsweise mittels wenigstens einer durch Krafteinwirkung lösbare Schnapp- und/oder Rast- und/oder Klemmverbindungen in ihrer Betriebslage fixiert. Diese Schnapp- und/oder Rast- und/oder Klemmverbindung kann in einer vorteilhaften Ausführungsvariante bspw. als Kugel-Pfannen-Rastverbindung ausgebildet sein. Beispielsweise kann vorgesehen sein, dass die zum Lösen des Greifarmes benötigte Kraft in vertikaler Richtung und entgegen dem Träger größer als das Eigengewicht des Trägers ist. Durch die zusätzliche Fixierung über Schnapp- und/oder Rast- und/oder Klemmverbindungen kann eine definierte Haftreibung zwischen Greifarm und Verbindungselement hergestellt werden, die zum Lösen des Greifarmes überwunden werden muss. Zur Ausgestaltung der Schnapp- und/oder Rast-und/oder Klemmverbindung kommen beispielsweise Kugel-Pfannen-Rastverbindungen in Betracht. Hierbei liegt eine an einem Bolzen angebrachte Kugel in einem adaptiv an die Geometrie der Kugel angepasstem Aufnahmeraum (Pfanne). Die Kugel kann in dem Aufnahmeraum federnd gelagert sein, so dass diese beim Lösen der Kugel-Pfannen-Rastverbindung die Pfanne verlässt.

Darüber hinaus können weitere mechanische Sicherungsmaßnahmen vorgesehen sein. So kann der Führungsbolzen an einem freien Ende bspw. ein Gewinde aufweisen. Das freie Ende, an welchem das Gewinde angeordnet ist, kann durch die Führungsnut greifen. Zudem kann beispielsweise eine Schraubmutter vorhanden sein, welche an dem Gewinde angeordnet ist und welche somit ein unbeabsichtigtes Lösen des Führungsbolzens aus der Führungsnut in horizontaler Richtung unterbindet.

In Bezug auf das verwendete Material der Verbindungselemente kann bspw. legierter Edelstahl Verwendung finden. Die Verbindungselemente können beispielsweise als VA-Bleche ausgebildet sein. Als Legierungen eignen sich, je nach erwünschter Materialeigenschaft, bspw. Chrom und/oder Nickel und/oder Silicium und/oder Mangan. Sämtliche möglichen Legierungen sind dem Fachmann bekannt und werden aus diesem Grunde nicht explizit aufgeführt.

Hinsichtlich der Formgebung der Greifarme kann bspw. eine gabelförmige Kontur von Vorteil sein, bei welcher der Greifarm im unteren Bereich, an dem die Klemmbacken befestigt sind, als breites, ggf. durchbrochenes Blech ausgebildet ist, das sich nach oben hin in zwei parallele Schenkel fortsetzt, welche an ihrer Oberseite die beiden parallelen Verbindungen zum Träger aufweisen. Ein solcher Greifarm kann aus gestanztem oder lasergeschnittenen und anschließend biegeumgeformtem Blech gefertigt sein, so dass er sich im Wesentlichen einstückig und ohne weitere Füge- oder Verbindungsschritte herstellen lässt. Die an den oberen Enden der beiden Schenkel angeordneten Führungsbolzen können bspw. verschraubt oder vernietet, ggf. auch verpresst oder verschweißt sein.

Die vorliegende Erfindung umfasst weiterhin auch ein Verfahren zum Lösen von Greifarmen von einem vertikal und horizontal beweglichen Träger einer Greifvorrichtung, die zur Aufnahme und/oder Handhabung mindestens eines Gegenstandes oder Verpackungsgutes vorgesehen ist. Die voneinander beabstandeten Greifarme sind zur Aufnahme und zum Freigeben eines Gegenstandes oder Verpackungsgutes gegeneinander in horizontaler Richtung und gemeinsam mit dem Träger in vertikaler Richtung sowie in horizontaler Richtung bewegbar. Zwischen jedem Greifarm und dem Träger sind lösbare mechanische Verbindungen vorgesehen, die jeweils durch ineinander greifende Führungsnuten und korrespondierende Führungsbolzen gebildet sind. Das Lösen des Greifarmes von einem Verbindungselement des Trägers kann aufgrund einer definierten Krafteinwirkung, insbesondere von unten und/oder beim Aufsetzen des Greifarmes auf eine starre Oberfläche oder bei einer Kollision des Greifarmes mit einem festen Körper ausgelöst werden. Hierbei werden die Führungsbolzen von einem, eine Betriebslage der Greifarme definierenden unteren Anschlag in den Führungsnuten gleitend geführt. Jede mechanische Verbindung jedes Greifarms am Träger umfasst zumindest zwei in vertikalem Abstand voneinander angeordnete Führungsnuten am Verbindungselement des Trägers oder am Greifarm, die zur Aufnahme und zur Führung von mindestens zwei korrespondierenden Führungsbolzen in entsprechendem vertikalem Abstand vorgesehen sind. Die Führungsnuten bilden jeweils nach oben und und/oder seitlich gekrümmte und offen endende Führungskulissen für die Führungsbolzen, wobei untere Anschläge eine Betriebslage der Greifarme definieren.

Die mindestens zwei Führungsnuten weisen jeweils unterschiedliche Verläufe und Krümmungen auf, wobei der Verlauf der ersten, oberen Führungsnut vom unteren Anschlag aus in gekrümmtem Verlauf zur Außenseite des Trägers weist. Der Verlauf der zweiten, unteren Führungsnut weist vom unteren Anschlag aus zunächst vertikal nach oben und anschließend in gekrümmtem Verlauf zur Außenseite des Trägers hin, wodurch der jeweilige Greifarm beim Lösen vom Träger aufgrund einer Krafteinwirkung von unten durch Aufsetzen oder Kollision auf bzw. mit einer starren Oberfläche oder einen Körper eine Kipp- oder Schwenkbewegung um den Drehpunkt des unteren Führungsbolzens ausführt, bei welcher der obere Führungsbolzen in der oberen Führungsnut in gekrümmter Richtung zur Außenseite des Trägers und der untere Führungsbolzen in der unteren Führungsnut zunächst vertikal nach oben und anschließend in gekrümmter Richtung zur Außenseite des Trägers geführt wird. Durch die nach oben gerichtete Ausweichbewegung und gleichzeitig bzw. überlagert erfolgende Kipp- oder Schwenkbewegung des sich vom Träger lösenden Greifarms bewegt sich seine untere Klemmbacke zunächst zur mittleren Symmetrieebene hin, bevor der Greifarm vollständig vom Träger der Greifvorrichtung getrennt wird. Vorzugsweise wird der Greifarm am Verbindungselement durch eine Rast- und/oder Klemm- und/oder Schnappverbindung gehalten.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechend nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Seitenansicht einer Ausführungsform einer Greifvorrichtung gemäß vorliegender Erfindung.
Fig. 2 zeigt eine perspektivische Teildarstellung der Greifvorrichtung gemäß Fig. 1.
Fig. 3 zeigt den Teilausschnitt A gemäß Fig. 1 in vergrößerter Darstellung.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

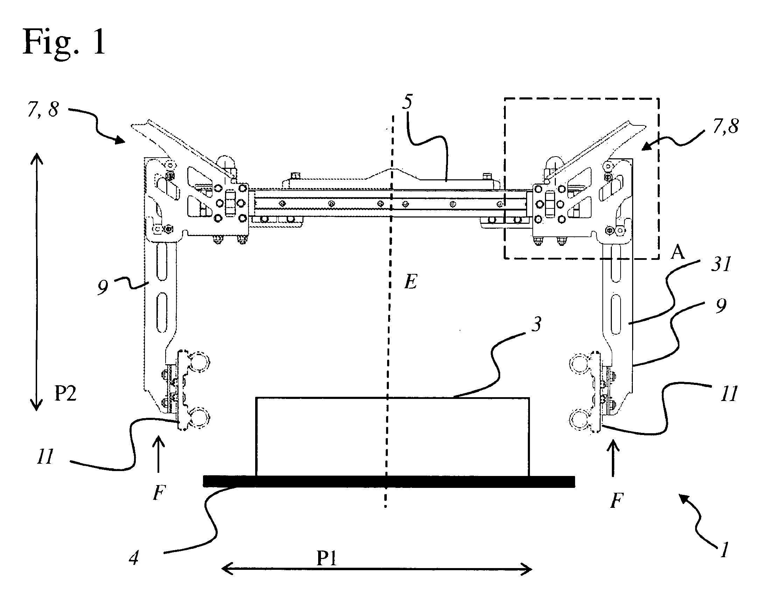

Die schematische Ansicht der Fig. 1 zeigt eine Ausführungsform einer Greifvorrichtung 1. Die Greifvorrichtung 1 umfasst zwei horizontal voneinander beabstandete und an einem Träger 5 über mechanische Verbindungen 7 angeordnete Greifarme 9. Die Greifarme 9 sind relativ zueinander in Pfeilrichtung P1 gegeneinander bewegbar, vorzugsweise in synchroner Zustellbewegung oder durch synchrones Entfernen voneinander, was durch geeignete Horizontalführungen im Kopfbereich der Greifvorrichtung 1 bzw. im Träger 5 zu gewährleisten ist. Zudem ist der gesamte Kopfabschnitt bzw. der Träger 5 gemeinsam mit den daran geführten und gehaltenen Greifarmen 9 in vertikaler Richtung P2 bewegbar. Die Bewegung in vertikaler Richtung erfolgt in der gezeigten Ausführungsform nicht durch Bewegen der Greifarme 9. Vielmehr wird die Bewegung in vertikaler Richtung P2 durch ein Heben und/oder Senken des Trägers 5 und damit der an dem Träger 5 angeordneten Greifarme 9 bewirkt. Darüber hinaus kann der Träger 5 vorzugsweise um eine vertikale Achse gedreht werden, um eine gewünschte Positionierung und Umsetzung der mit den Greifarmen 9 bewegten Artikel oder Stückgüter zu ermöglichen.

Bei einer definierten Krafteinwirkung F auf mindestens einen der beiden Greifarme 9 in vertikaler Richtung von unten und damit entgegen dem Träger 5 ist der jeweilige Greifarm 9 vom Träger 5 gemäß der vorliegenden Erfindung lösbar, so dass eine Beschädigung des Trägers 5 oder anderer Rahmenteile durch eine unzulässig hohe Kraft F, die auf den entsprechenden Greifarm 9 einwirkt, vermieden werden kann.

Durch die Greifvorrichtung 1 können Gegenstände 3 oder Stückgüter erfasst, angehoben und platziert oder erfasst und verschoben werden, ggf. unter gleichzeitigem Verdrehen der gesamten Greifvorrichtung 1. Die Gegenstände 3 können sich beispielsweise vor oder während der Erfassung und/oder während oder nach der Platzierung auf einer Fördereinrichtung 4 wie einem Horizontalfördergurt oder Förderband o. dgl. befinden. An jedem der Greifarme 9 ist jeweils eine Klemmbacke 11 zur Fixierung des Gegenstandes 3 angeordnet. Diese Klemmbacke 11 kann bspw. flexibel verformbare Anlageflächen aufweisen, um eine schonende Handhabung der Artikel 3 zu ermöglichen und gleichzeitig ihr Abrutschen oder Abgleiten nach dem Greifen und während ihrer Handhabung zuverlässig zu verhindern.

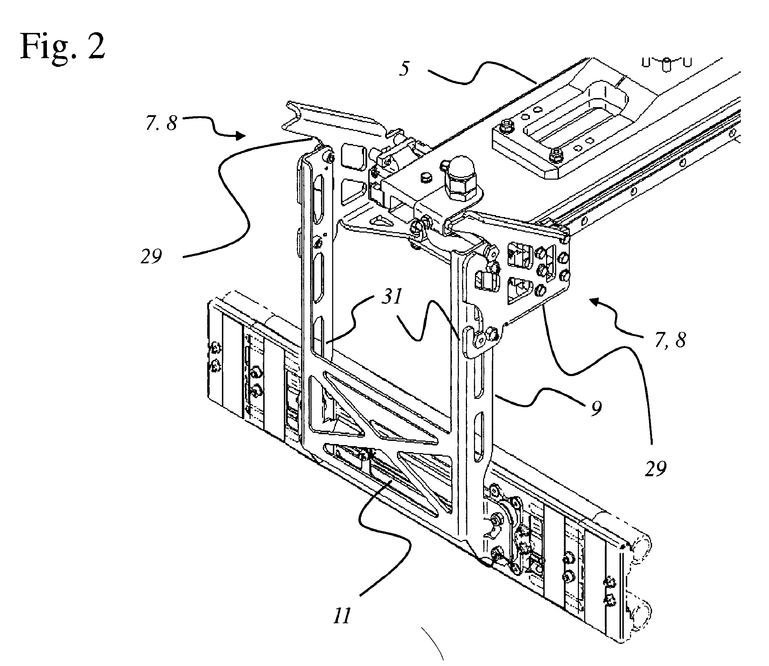

Die schematische Perspektivansicht der Fig. 2 zeigt einen Teil der Greifvorrichtung 1 mit einem der beiden Greifarme 9. Der andere Greifarm 9 ist auf der entgegengesetzten Seite des Trägers 5 und spiegelsymmetrisch zu der in Fig. 1 dargestellten Symmetrieebene E angeordnet ist. Der Greifarm 9 ist in der gezeigten Ausführungsform über mechanische Verbindungen 7 und Kontaktelemente 8 am Träger 5 angeordnet. Die mechanischen Verbindungen 7 bzw. Kontaktelemente 8 umfassen zwei Verbindungselemente 29. An jedem dieser beiden Verbindungselemente 29 ist jeweils ein Greifarm 9 angeordnet und lösbar fixiert.

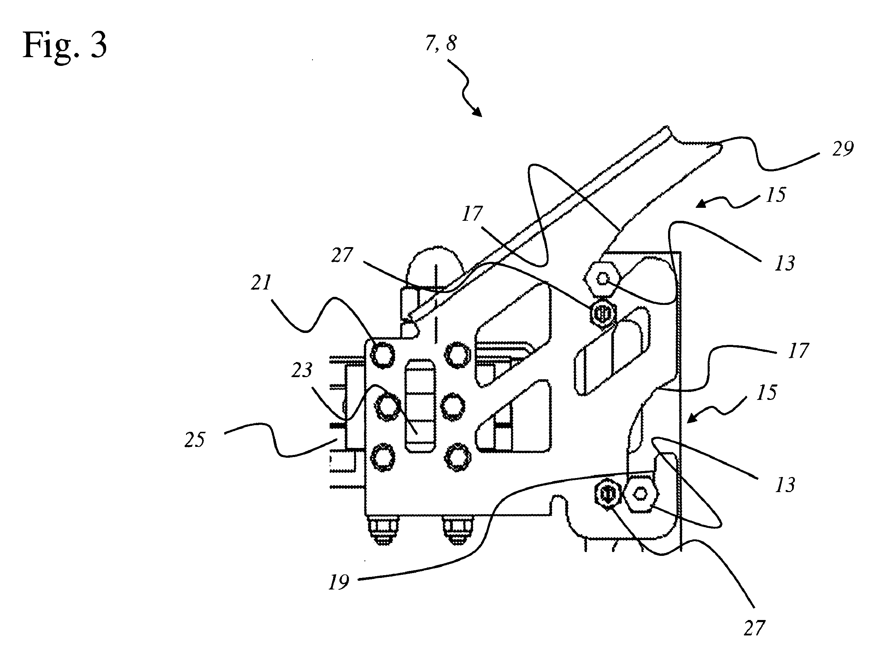

Die Darstellung der Fig. 3 zeigt den Ausschnitt A aus Fig. 1 in vergrößerter Ansicht. An dem in Fig. 3 in Seitenansicht dargestellten Greifarm 9 sind zwei Führungsbolzen 13 erkennbar. Zwei weitere Führungsbolzen 13 befinden sich auf der abgewandten anderen Seite, die in Fig. 3 nicht erkennbar ist. Die mechanische Verbindung 7 umfasst am Verbindungselement 29 mehrere Führungsnuten 15 zur Aufnahme jeweils eines Führungsbolzens 13. Beide Führungsnuten 15 einer Seite weisen einen zumindest teilweise gekrümmten Verlauf 17 auf. Ferner verläuft die untere der beiden Führungsnuten 15 in Teilbereichen vertikal, weist also einen geraden Verlauf 19 auf.

Das Verbindungselement 7 ist über Schraubverbindungen 21 an einem Wagen 23 fixiert, der sich entlang der Schienenführung 25 des Trägers 5 (siehe Fig. 1) bewegen kann. Zur lösbaren Fixierung des Greifarmes 9 sind weiterhin zwei Kugel-Pfannen-Rastverbindungen 27 vorhanden. Die Kugel-Pfannen-Rastverbindungen 27 beinhalten jeweils einen Bolzen (nicht dargestellt), an dessen einem freien und dem Greifarm 9 zugewandten Ende eine Kugel (nicht dargestellt) federnd gelagert ist, die weiter in einer Pfanne (nicht dargestellt) des Greifarmes 9 unter Haftreibung angeordnet ist.

Aufgrund der unterschiedlich ausgestalteten Formgebung der Führungsnuten 15 erfolgt beim Lösen des Greifarmes 9 von der Greifvorrichtung 1 zunächst eine Schwenkbewegung des Greifarmes 9 um den unteren der beiden Bolzen 13. Die an dem Greifarm 9 angeordnete Klemmbacke 11 bewegt sich somit in Richtung der Symmetrieebene E (siehe hierzu Fig. 1). Hierauf wird der gesamte Greifarm 9 weg von der Symmetrieebene 9 geführt und von der Greifvorrichtung 1 gelöst.

Wie anhand der Figuren 1 bis 3 erkennbar ist, weist der Greifarm 9 eine gabelähnliche Gestaltung auf. So ist der Greifarm 9 im unteren Bereich, an dem die Klemmbacken 11 befestigt sind, als breites, durchbrochenes Blech ausgebildet, das sich nach oben hin in zwei parallele Schenkel 31 fortsetzt, welche an ihrem oberen Ende jeweils die beiden parallelen Verbindungen zum Träger 5 aufweisen. Der gezeigte Greifarm 9 kann aus gestanztem oder lasergeschnittenem und anschließend biegeumgeformtem Blech gefertigt sein, so dass er sich im Wesentlichen einstückig und ohne weitere Füge- oder Verbindungsschritte herstellen lässt. Die an den oberen Enden der beiden Schenkel 31 angeordneten Führungsbolzen 13 können bspw. verschraubt oder vernietet, ggf. auch verpresst oder verschweißt sein.

In Bezug auf das verwendete Material der Verbindungselemente 29 kann bspw. legierter Edelstahl Verwendung finden. Die Verbindungselemente 29 sowie auch die Trägerabschnitte der Greifarme 9 können bspw. als VA-Bleche ausgebildet sein. Als Legierungen eignen sich, je nach erwünschter Materialeigenschaft, bspw. Chrom und/oder Nickel und/oder Silicium und/oder Mangan. Sämtliche möglichen Legierungen sind dem Fachmann bekannt und werden aus diesem Grunde nicht explizit aufgeführt.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Greifvorrichtung
- 3: Gegenstand
- 4: Fördereinrichtung
- 5: Träger
- 7: Mechanische Verbindung
- 8: Kontaktelement
- 9: Greifarm
- 11: Klemmbacke
- 13: Führungsbolzen
13a erster, oberer Führungsbolzen
13b zweiter, unterer Führungsbolzen
- 15: Führungsnut
15a erste, obere Führungsnut
15b zweite, untere Führungsnut
- 17: gekrümmter Verlauf
- 19: Gerader, vertikaler Verlauf
- 21: Schraubverbindung
- 23: Wagen
- 25: Schienenführung
- 27: Kugel-Pfannen-Rastverbindung
- 29: Verbindungselement
- 31: Schenkel
- E: Symmetrieebene
- F: Definierte Krafteinwirkung
- P1: Vertikale Bewegungsrichtung
- P2: Horizontale Bewegungsrichtung

## Patentansprüche

1. Greifvorrichtung (1) zur Aufnahme und/oder zur Handhabung mindestens eines Gegenstandes (3), insbesondere eines Verpackungsgutes, mit zwei zur Aufnahme und zum Freigeben eines Gegenstandes (3) oder Verpackungsgutes abstandsveränderlichen und an einem gemeinsamen Träger (5) angeordneten Greifarmen (9), **dadurch gekennzeichnet, dass** jeder Greifarm (9) bei einer definierten Krafteinwirkung (F), insbesondere von unten und/oder beim Aufsetzen des Greifarms (9) auf eine starre Oberfläche oder bei einer Kollision des Greifarms (9) mit einem festen Körper unter Überwindung einer definierten Haltekraft vom Träger (5) lösbar ist.

2. Greifvorrichtung nach Anspruch 1, bei der jeder der Greifarme (9) jeweils mittels einer mechanischen Verbindung (7) lösbar am Träger (5) angeordnet und bei einer definierten Krafteinwirkung (F) auf den jeweiligen Greifarm (9) von unten bzw. in vertikaler Richtung und entgegen dem Träger (5) vom Träger (5) lösbar ist.

3. Greifvorrichtung nach Anspruch 2, wobei die lösbare mechanische Verbindung (7) zwischen jedem Greifarm (9) und dem gemeinsamen Träger (5) durch mindestens zwei korrespondierende und miteinander im Eingriff befindliche Kontaktelemente (8) gebildet ist, wobei jedes der Kontaktelemente (8) mindestens einen am jeweiligen Greifarm (9) angeordneten ersten Führungsbolzen (13) umfasst, und wobei mindestens zwei Verbindungselemente (29) am Träger (5) angeordnet sind, die jeweils mindestens eine Führungsnut (15) zur Aufnahme eines Führungsbolzens (13) eines Greifarmes (9) aufweisen.

4. Greifvorrichtung nach Anspruch 3, bei der an jedem Greifarm (9) jeweils mindestens zwei Führungsbolzen (13) angeordnet sind, die jeweils mit entsprechenden Führungsnuten (15) am Verbindungselement (29) des Trägers (5) korrespondieren und dort aufgenommen sind.

5. Greifvorrichtung nach Anspruch 2, wobei die lösbare mechanische Verbindung (7) zwischen jedem Greifarm (9) und dem gemeinsamen Träger (5) durch mindestens zwei korrespondierende und miteinander im Eingriff befindliche Kontaktelemente (8) gebildet ist, wobei jedes der Kontaktelemente (8) mindestens eine am jeweiligen Greifarm (9) angeordnete Führungsnut (15) umfasst, und wobei mindestens zwei Verbindungselemente (29) am Träger (5) angeordnet sind, die jeweils mindestens einen ersten Führungsbolzen (13) zur Aufnahme und Führung in der Führungsnut (15) des Greifarms (9) aufweisen.

6. Greifvorrichtung nach Anspruch 5, bei der an jedem Greifarm (9) jeweils mindestens zwei Führungsnuten (15) angeordnet sind, die jeweils mit entsprechenden Führungsbolzen (13) am Verbindungselement (29) des Trägers (5) korrespondieren und diese aufnehmen.

7. Greifvorrichtung nach einem der Ansprüche 3 bis 6, bei der die Führungsnuten (15) jeweils Führungskulissen für die Führungsbolzen (13) bilden, mit einem unteren Anschlag zur Definition einer Betriebslage der Greifarme (9) und mit einem nach oben und/oder seitlich gekrümmten und offen endenden Verlauf (17) zur Definition eines Bewegungsverlaufs der Greifarme (9) beim Lösen vom Träger (5) durch ein Aufsetzen oder eine Kollision auf eine starre Oberfläche oder einen Körper.

8. Greifvorrichtung nach einem der Ansprüche 3 bis 7, bei der jede mechanische Verbindung (7) jedes Greifarms (9) am Träger (5) zumindest zwei in vertikalem Abstand voneinander angeordnete Führungsnuten (15) am Verbindungselement (29) des Trägers (5) oder am Greifarm (9) zur Aufnahme und zur Führung von mindestens zwei korrespondierenden Führungsbolzen (13) in entsprechendem vertikalem Abstand voneinander aufweist.

9. Greifvorrichtung nach Anspruch 7 oder 8, bei der die mindestens zwei Führungsnuten (15) jeweils unterschiedliche Verläufe und Krümmungen aufweisen, wobei der Verlauf der ersten, oberen Führungsnut (15a) vom unteren Anschlag aus in gekrümmtem Verlauf zur Außenseite des Trägers (5) weist, und wobei der Verlauf der zweiten, unteren Führungsnut (15b) vom unteren Anschlag aus zunächst vertikal nach oben und anschließend in gekrümmtem Verlauf zur Außenseite des Trägers (5) weist.

10. Greifvorrichtung nach einem der Ansprüche 1 bis 9, bei der die Greifarme (9) am Verbindungselement (29) mittels wenigstens einer durch Krafteinwirkung (F) lösbare Schnapp- und/oder Rast- und/oder Klemmverbindungen in ihrer Betriebslage fixiert sind.

11. Greifvorrichtung nach Anspruch 10, wobei die Schnapp- und/oder Rast- und/oder Klemmverbindung als Kugel-Pfannen-Rastverbindung (27) ausgebildet ist.

12. Verfahren zum Lösen von Greifarmen (9) von einem vertikal und horizontal beweglichen Träger (5) einer Greifvorrichtung (1) zur Aufnahme und/oder Handhabung mindestens eines Gegenstandes (3) oder Verpackungsgutes, wobei die voneinander beabstandeten Greifarme (9) zur Aufnahme und zum Freigeben eines Gegenstandes (3) oder Verpackungsgutes gegeneinander in horizontaler Richtung und gemeinsam mit dem Träger (5) in vertikaler Richtung (P2) sowie in horizontaler Richtung (P1) bewegbar sind, wobei zwischen jedem Greifarm (9) und dem Träger lösbare (5) mechanische Verbindungen (7) vorgesehen sind, die jeweils durch ineinander greifende Führungsnuten (15) und korrespondierende Führungsbolzen (13) gebildet sind, und wobei beim Lösen des Greifarmes (9) von einem Verbindungselement (29) des Trägers (5) aufgrund einer definierten Krafteinwirkung (F), insbesondere von unten und/oder beim Aufsetzen des Greifarmes (9) auf eine starre Oberfläche oder bei einer Kollision des Greifarmes (9) mit einem festen Körper, die Führungsbolzen (13) von einem, eine Betriebslage der Greifarme (9) definierenden unteren Anschlag in den Führungsnuten (15) gleitend geführt werden.

13. Verfahren nach Anspruch 12, bei dem die mindestens zwei Führungsnuten (15) jeweils unterschiedliche Verläufe und Krümmungen aufweisen, wobei der Verlauf der ersten, oberen Führungsnut (15a) vom unteren Anschlag aus in gekrümmtem Verlauf zur Außenseite des Trägers (5) weist, und wobei der Verlauf der zweiten, unteren Führungsnut (15b) vom unteren Anschlag aus zunächst vertikal nach oben und anschließend in gekrümmtem Verlauf zur Außenseite des Trägers (5) weist, wodurch der jeweilige Greifarm (9) beim Lösen vom Träger (5) aufgrund einer Krafteinwirkung (F) von unten durch Aufsetzen oder Kollision auf bzw. mit einer starren Oberfläche oder einen Körper eine Kipp- oder Schwenkbewegung um den Drehpunkt des unteren Führungsbolzens (13b) ausführt, bei welcher der obere Führungsbolzen (13a) in der oberen Führungsnut (15a) in gekrümmter Richtung zur Außenseite des Trägers (5) und der untere Führungsbolzen (13b) in der unteren Führungsnut (15b) zunächst vertikal nach oben und anschließend in gekrümmter Richtung zur Außenseite des Trägers (5) geführt wird.

14. Verfahren nach Anspruch 13, bei dem der sich durch eine nach oben gerichtete Ausweich- und gleichzeitige Kipp- oder Schwenkbewegung vom Träger (5) lösende Greifarm (9) seine untere Klemmbacke (11) zur mittleren Symmetrieebene (E) hin bewegt, bevor er vollständig vom Träger (5) der Greifvorrichtung (1) getrennt wird.

## Claims

1. Gripping device (1) for receiving and/or handling at least one object (3), in particular a packaging item, with said gripping device having two variably spaceable gripping arms (9), arranged on one common support beam (5), for receiving and releasing an object (3) or a packaging item, **characterized in that** each gripping arm (9) is releasable from the support beam (5) under a defined application of force (F) sufficient to overcome a defined retention force, said force (F) being applied in particular from below and/or on placing the gripping arm (9) onto a rigid surface, or on collision of the gripping arm (9) with a solid body.

2. Gripping device according to claim 1, wherein each of the gripping arms (9) is in each case arranged releasably on the support beam (5) by means of a mechanical connection (7), and wherein each of the gripping arms (9) is in each case releasable from the support beam (5) under a defined application of force (F) onto the respective gripping arm (9) from below or in a vertical direction in opposition to the support beam (5).

3. Gripping device according to claim 2, wherein the releasable mechanical connection (7) is formed between each gripping arm (9) and the common support beam (5) by at least two corresponding contact elements (8) engaging with each other, wherein each of the contact elements (8) comprises at least a first guide bolt (13) arranged on the respective gripping arm (9), and wherein at least two connecting elements (29) are arranged on the support beam (5), with each of the connecting elements (29) having at least one guide groove (15) for receiving a guide bolt (13) of one of the gripping arms (9).

4. Gripping device according to claim 3, wherein at least two guide bolts (13) are arranged in each case on each of the gripping arms (9), with said guide bolts (13) each corresponding to appropriate guide grooves (15) on the connecting element (29) of the support beam (5) and being received therein.

5. Gripping device according to claim 2, wherein the releasable mechanical connection (7) is formed between each gripping arm (9) and the common support beam (5) by at least two corresponding contact elements (8) engaging with each other, wherein each of the contact elements (8) comprises a guide groove (15) arranged on the respective gripping arm (9), and wherein at least two connecting elements (29) are arranged on the support beam (5), with each of the connecting elements (29) having at least one guide bolt (13) for being received and guided in the guide groove (15) of the gripping arm (9).

6. Gripping device according to claim 5, wherein at least two guide grooves (15) are arranged in each case on each of the gripping arms (9), with said guide grooves (15) each corresponding to appropriate guide bolts (13) on the connecting element (29) of the support beam (5), and with the guide grooves (15) receiving these guide bolts (13).

7. Gripping device according to one of the claims 3 to 6, wherein the guide grooves (15) in each case form guide slots for the guide bolts (13), with a bottom stop for defining an operating position of the gripping arms (9) and with an upwardly and/or sidewardly curved, open-ended profile (17) for defining a path of movement of the gripping arms (9) when releasing them from the support beam (5) by placing them on or colliding them with a rigid surface or a body.

8. Gripping device according to one of the claims 3 to 7, wherein each mechanical connection (7) of each gripping arm (9) on the support beam (5) has at least two vertically spaced guide grooves (15) on the connecting element (29) of the support beam (5) or on the gripping arm (9), with said guide grooves being suited for receiving and guiding at least two corresponding guide bolts (13), which are appropriately spaced at a vertical distance from each other.

9. Gripping device according to claim 7 or 8, wherein the at least two guide grooves (15) each have different profiles and curvatures, wherein the profile of the first, top guide groove (15a) faces in a curved profile from the bottom stop toward the outside of the support beam (5), and wherein the profile of the second, bottom guide groove (15b) faces from the bottom stop vertically upward first and then faces in a curved profile toward the outside of the support beam (5).

10. Gripping device according to one of the claims 1 to 9, wherein the gripping arms (9) are fixed on the connecting element (29) in their operating position by means of at least one snap and/or latch and/or clamp connection, which is releasable under application of a force (F).

11. Gripping device according to claim 10, wherein the snap and/or latch and/or clamp connection is formed as a ball and socket latch mechanism (27).

12. Method for releasing gripping arms (9) from a vertically and horizontally movable support beam (5) of a gripping device (1) for receiving and/or handling at least one object (3) or packaging item, wherein the gripping arms (9) for receiving and releasing an object (3) or a packaging item are spaced at a distance from each other and movable relative to each other in a horizontal direction as well as movable in a vertical direction (P2) and a horizontal direction (P1) together with the support beam (5), and wherein releasable mechanical connections (7) are provided between each gripping arm (9) and the support beam (5), with said mechanical connections (7) in each case being formed by guide grooves (15) and corresponding guide bolts (13), both engaging with each other, and wherein on releasing the gripping arm (9) from a connecting element (29) of the support beam (5) by means of a defined force (F) being applied, in particular, from below and/or on placing the gripping arm (9) onto a rigid surface, or on collision of the gripping arm (9) with a solid body, the guide bolts (13) are slidingly guided in the guide grooves (15), away from a bottom stop defining an operating position of the gripping arms (9).

13. Method according to claim 12, wherein the at least two guide grooves (15) each have different profiles and curvatures, and wherein the profile of the first, top guide groove (15a) faces in a curved profile from the bottom stop toward the outside of the support beam (5), and wherein the profile of the second, bottom guide groove (15b) faces from the bottom stop vertically upward first and then faces in a curved profile toward the outside of the support beam (5), whereby the respective gripping arm (9), on being released from the support beam (5) by means of a force (F) being applied from below or by placing it on or colliding it with a rigid surface or a body, performs a tilt or swing movement around the pivot point of the bottom guide bolt (13b), which causes the top guide bolt (13a) in the top guide groove (15a) to be guided in a curved direction toward the outside of the support beam (5), and the bottom guide bolt (13b) in the bottom guide groove (15b) to be guided vertically upward first and then in a curved direction toward the outside of the support beam (5).

14. Method according to claim 13, wherein the gripping arm (9), on being released from the support beam (5) by an upwardly directed evasive and, at the same time, tilt and swing movement, first moves its lower clamping jaw (11) toward the central plane of symmetry (E) before being completely separated from the support beam (5) of the gripping device (1).

## Revendications

1. Dispositif de préhension (1) pour la réception et/ou la manipulation d'au moins un objet (3), en particulier d'un produit d'emballage, comprenant deux bras de préhension (9) à écartement variable pour recevoir et pour libérer un objet (3) ou produit d'emballage et disposés sur un support (5) commun, **caractérisé par le fait que**, lorsqu'une force définie (F) est exercée, en particulier d'en bas, et/ou le bras de préhension (9) se pose sur une surface rigide ou lors d'une collision dudit bras de préhension (9) avec un corps solide, chacun des bras de préhension (9) peut être détaché dudit support (5) en vainquant une force de maintien définie.

2. Dispositif de préhension selon la revendication 1, dans lequel chacun des bras de préhension (9) est disposé de manière amovible, respectivement par l'intermédiaire d'une liaison mécanique (7), sur ledit support (5) et peut être détaché du support (5) lorsqu'une force définie (F) est exercée d'en bas ou bien dans la direction verticale sur le bras de préhension (9) respectif et à l'encontre du support (5).

3. Dispositif de préhension selon la revendication 2, dans lequel ladite liaison mécanique amovible (7) entre chaque bras de préhension (9) et ledit support (5) commun est réalisée par au moins deux éléments de contact (8) correspondants et en prise entre eux, chacun des éléments de contact (8) comprenant au moins un premier boulon de guidage (13) disposé sur le bras de préhension (9) respectif, et dans lequel au moins deux éléments de jonction (29) sont disposés sur ledit support (5) qui présentent chacun au moins une rainure de guidage (15) de réception d'un boulon de guidage (13) d'un bras de préhension (9).

4. Dispositif de préhension selon la revendication 3, dans lequel sur chacun des bras de préhension (9) sont disposés respectivement au moins deux boulons de guidage (13) qui correspondent chacun avec des rainures de guidage (15) correspondantes sur ledit élément de jonction (29) du support (5) et y sont logés.

5. Dispositif de préhension selon la revendication 2, dans lequel ladite liaison mécanique amovible (7) entre chaque bras de préhension (9) et ledit support (5) commun est réalisée par au moins deux éléments de contact (8) correspondants et en prise entre eux, chacun des éléments de contact (8) comprenant au moins une rainure de guidage (15) disposée sur le bras de préhension (9) respectif, et dans lequel au moins deux éléments de jonction (29) sont disposés sur ledit support (5) qui présentent chacun au moins un premier boulon de guidage (13) de réception et de guidage dans ladite rainure de guidage (15) du bras de préhension (9).

6. Dispositif de préhension selon la revendication 5, dans lequel sur chacun des bras de préhension (9) sont disposées respectivement au moins deux rainures de guidage (15) qui correspondent chacune avec des boulons de guidage (13) correspondants sur ledit élément de jonction (29) du support (5) et logent ceux-ci.

7. Dispositif de préhension selon l'une quelconque des revendications 3 à 6, dans lequel lesdites rainures de guidage (15) forment chacune des coulisses de guidage pour les boulons de guidage (13), avec une butée inférieure pour la définition d'une position de fonctionnement des bras de préhension (9) et avec une allure (17) courbée vers le haut et/ou latéralement et se terminant de façon ouverte, pour la définition d'une trajectoire de mouvement des bras de préhension (9) lorsqu'ils sont détachés du support (5) en raison d'une pose sur ou d'une collision avec une surface rigide ou un corps.

8. Dispositif de préhension selon l'une quelconque des revendications 3 à 7, dans lequel chaque liaison mécanique (7) de chaque bras de préhension (9) sur ledit support (5) présente au moins deux rainures de guidage (15) sur ledit élément de jonction (29) du support (5) ou sur le bras de préhension (9), qui sont disposées à distance verticale les unes des autres et destinées à recevoir et à guider au moins deux boulons de guidage (13) correspondants, à une distance verticale correspondante les uns des autres.

9. Dispositif de préhension selon la revendication 7 ou 8, dans lequel lesdites au moins deux rainures de guidage (15) présentent des allures et courbures respectivement différentes, l'allure de la première rainure de guidage supérieure (15a) s'étendant, à partir de la butée inférieure, en courbe vers l'extérieur du support (5) et l'allure de la deuxième rainure de guiage inférieure (15b) s'étendant, à partir de la butée inférieure, d'abord verticalement vers le haut et ensuite en courbe vers l'extérieur du support (5).

10. Dispositif de préhension selon l'une quelconque des revendications 1 à 9, dans lequel, dans leur position de fonctionnement, les bras de préhension (9) sont fixés sur ledit élément de jonction (29) au moyen d'au moins une liaison à enclenchement et/ou à encliquetage et/ou à serrage apte à être desserrée par l'action d'une force (F).

11. Dispositif de préhension selon la revendication 10, dans lequel ladite liaison à enclenchement et/ou à encliquetage et/ou à serrage est réalisée en tant que liaison à encliquetage à bille et cuvette (27).

12. Procédé de détachement de bras de préhension (9) d'un support (5) déplaçable verticalement et horizontalement, d'un dispositif de préhension (1) pour la réception et/ou la manipulation d'au moins un objet (3) ou produit d'emballage, lesdits bras de préhension (9) espacés les uns des autres pour recevoir et pour libérer un objet (3) ou produit d'emballage pouvant être déplacés les uns contre les autres dans la direction horizontale et conjointement avec ledit support (5) dans la direction verticale (P2) ainsi que dans la direction horizontale (P1), entre chaque bras de préhension (9) et ledit support (5) étant prévues des liaisons mécaniques amovibles (7) qui sont formées chacune par des rainures de guidage (15) et des boulons de guidage (13) correspondants qui sont en prise entre eux, et dans lequel, lorsque le bras de préhension (9) est détaché d'un élément de jonction (29) du support (5) du fait qu'une force définie (F) est exercée, en particulier d'en bas, et/ou que le bras de préhension (9) se pose sur une surface rigide ou en cas de collision dudit bras de préhension (9) avec un corps solide, lesdits boulons de guidage (13) sont guidés à glissement dans les rainures de guidage (15) par une butée inférieure définissant une position de fonctionnement des bras de préhension (9).

13. Procédé selon la revendication 12, dans lequel lesdites au moins deux rainures de guidage (15) présentent des allures et courbures respectivement différentes, l'allure de la première rainure de guidage supérieure (15a) s'étendant, à partir de la butée inférieure, en courbe vers l'extérieur du support (5) et l'allure de la deuxième rainure de guiage inférieure (15b) s'étendant, à partir de la butée inférieure, d'abord verticalement vers le haut et ensuite en courbe vers l'extérieur du support (5), ce par quoi le bras de préhension (9) respectif, lorsqu'il est détaché du support (5) du fait qu'une force (F) est exercée d'en bas en raison d'une pose sur ou d'une collision avec une surface rigide ou un corps, exerce un mouvement de basculement ou de pivotement autour du pivot du boulon de guidage inférieur (13b) durant lequel le boulon de guidage supérieur (13a) est guidé dans la rainure de guiage supérieure (15a) dans une direction courbe vers l'extérieur du support (5) et le boulon de guidage inférieur (13b) est guidé dans la rainure de guidage inférieure (15b) d'abord verticalement vers le haut et ensuite dans une direction courbe vers l'extérieur du support (5).

14. Procédé selon la revendication 13, dans lequel le bras de préhension (9) qui se détache du support (5) par un mouvement d'évitement dirigé vers le haut et, en même temps, de basculement ou de pivotement, déplace sa mâchoire de serrage inférieure (11) vers le plan médian de symétrie (E) avant qu'il soit séparé complètement du support (5) du dispositif de préhension (1).
